# EUROPEAN PATENT APPLICATION

(11) **EP 4 804 362 A1**
(43) Date of publication of application: **09.09.2026**
(21) Application number: 25161486.3
(22) Date of filing: 04.03.2025
(51) Int. Cl.: H02J 3/00, F03D 80/60, H02J 3/38, H02J 13/00

(54) **METHOD OF DYNAMICALLY CONTROLLING POWER DERATING IN A WIND TURBINE ELECTRICAL COMPONENT, AND ASSOCIATED SYSTEM AND CONTROLLER**

(71) Applicant: Siemens Gamesa Renewable Energy A/S, 7330 Brande (DK)
(72) Inventor: Alberts, Johannes Gerhardes Wardjan, 2660 Brøndby Strand (DK); Dunne, Fiona, 24503 Lynchburg (US); Gilling, Lasse, 7100 Vejle (DK); Lund, Mogens, 6920 Videbaek (DK); Tibaldi, Carlo, 2300 København (DK)
(74) Representative: SGRE-Association

(57) **Abstract**

A method for dynamically controlling power derating in an electrical component involves obtaining the coolant inlet temperature of the component and an electrical load parameter. A dynamic temperature threshold for power derating is determined, varying as a function of the electrical load parameter. The measured coolant inlet temperature is compared to this dynamic temperature threshold, and the active and/or reactive power output of the electrical component is adjusted based on the dynamic temperature threshold.

## Description

### TECHNICAL FIELD

This disclosure generally relates to high temperature ride through and derating of an electrical component of a wind turbine such as converter or a transformer. More specifically, the present disclosure relates to a method, a system and a controller for dynamically derating power output of a wind turbine electrical component.

### BACKGROUND

Electrical components such as generators, converters, and transformers are commonly subjected to thermal stresses during operation. In conventional systems, a fixed temperature threshold-often based on the coolant inlet temperature alone-is used to determine when to curtail power. Although this strategy protects critical hardware from overheating, it presents several drawbacks in practice.

First, relying solely on a single coolant temperature threshold under all load conditions often leads to unnecessary power derating, especially when the electrical component is not operating at full capacity. Under partial load, the heat generated within the component is substantially lower than at maximum load, but conventional systems may still enforce power curtailment whenever the coolant temperature surpasses this single threshold.

Second, the conservatism of a one-size-fits-all threshold can impose additional capital expenses on equipment owners or manufacturers.

Current solutions that rely on a single threshold may force equipment to be sized for the most extreme thermal conditions. In practice, this can translate into overly large or over-specified electrical components, which significantly increases capital expenses.

A single threshold tied to worst-case conditions can prompt excessive cooling infrastructure, including larger heat exchangers or more aggressive cooling systems. This not only raises capital expenditures but also drives up operational costs due to higher energy consumption for cooling.

During high ambient temperatures, certain installations may experience frequent power curtailments, facing unexpected power shortfalls and lower availability.

In addition, if an electrical component frequently operates near or at the limit imposed by the single coolant threshold, unknown stress factors may cause accelerated wear over time. Consequently, service intervals may be more frequent, leading to additional downtime and increased maintenance efforts.

Thus, there may exist an urgent need to provide a solution for better thermal management and derating control of wind turbine electrical components to overcome one or more of the aforementioned drawbacks.

### SUMMARY

It is therefore an object of the disclosure to overcome the problems described above. The object is achieved by the independent claims. The dependent claims describe advantageous developments and modifications of the invention.

In a first aspect, this disclosure relates to a method of dynamically controlling power derating in an electrical component to account for both an electrical load parameter and a coolant inlet temperature. This approach may allow the temperature threshold for derating to shift based on the actual load, reducing unnecessary power curtailment and extending component lifetime.

In a first step, the method involves obtaining a parameter indicative of a coolant inlet temperature associated with the electrical component. E.g. a proxy may be used.

A temperature sensor may measure or estimate the inlet temperature of a coolant flowing into the electrical component.

In some embodiments, an alternative sensor arrangement (e.g., measuring internal winding temperature) may also be used in conjunction with or instead of the inlet coolant temperature.

In a further step, the method involves measuring or estimating an electrical load of the component. The load parameter may be any quantity indicative of how heavily the component is utilized, such as current, power (active or reactive), or even torque in mechanical systems.

In certain embodiments, the load parameter may be derived from operational data (e.g., real-time SCADA signals).

In a further step, the method involves determining a dynamic temperature threshold, or, in other words, dynamically determining temperature thresholds as a function of electrical load.

More in particular, the dynamic temperature threshold decreases as the electrical load parameter increases.

This dynamic temperature threshold may be obtained through a lookup table (LUT), interpolation among multiple set points, or a continuous function relating load to allowable coolant inlet temperature.

In some embodiments, the dynamic temperature threshold may be understood as more than one set of thresholds as a function of electrical load. A high load threshold can be set for full-load scenarios, while a second threshold can apply to partial loads, with interpolation or piecewise logic bridging the two.

In some embodiments, advanced algorithms (e.g., predictive models based on historical data) may refine the temperature dynamic threshold further.

In a further step, the method may involve comparing the measured coolant temperature to the dynamic temperature threshold previously determined. If the inlet temperature is at or below the computed dynamic temperature threshold, the system may allow full or near-full operation. Above the threshold, some level of derating or power curtailment may be triggered.

In a further step, the system may reduce the electrical component's active power, reactive power, or both, depending on control priorities.

The amount of power derating may vary proportionally with how far the coolant inlet temperature exceeds the threshold.

In some embodiments, only discrete "steps" of derating (e.g., 10%, 20%, 50% power reduction) may be implemented for simplicity in dependence at least in part on the comparison.

In some embodiments, the method may employ gradual reductions to avoid abrupt operational changes.

Optionally, a time delay or hysteresis mechanism may be introduced to prevent rapid toggling between power levels.

The solution as herein disclosed, may be retrofit into legacy control modules, supplementing existing "HTRT" [High Temperature Ride Through] approaches by merely adding an extra parameter (load) to the decision-making process. In some embodiments, a software update to read a new sensor value and adjust the threshold calculation by a dynamic calculating (e.g. a dynamic temperature threshold) might suffice.

In a further aspect of this disclosure, a system adapted to carry out any one of the steps of the method as above described is provided.

The electrical component may be a transformer, converter, generator, or any equipment subjected to thermal loading.

The system may include current sensors, torque sensors, or power meters to gather the electrical load parameter.

In certain embodiments, a control center (e.g., SCADA) may feed the load data to the system in real time.

Optional internal sensors or manufacturer-provided data may be used to better correlate load with temperature rise.

At least one sensor may measure the coolant inlet temperature; in further embodiments, a second sensor may measure an internal winding temperature or ambient temperature.

A dedicated controller may process sensor inputs and compute the dynamic temperature threshold.

In some embodiments, the threshold calculation may rely on a parameterized function stored in a memory device.

Alternatively, the controller may dynamically calibrate the threshold based on changing environmental and load conditions.

The controller may output a power reference or derating signal to the electrical component, instructing it to modify its power output as needed.

The logic may be embodied in software, firmware, or dedicated hardware circuits.

It should be understood that the inventive concepts described herein, while illustrated primarily in the context of a method for dynamically controlling power derating in a wind turbine electrical component, may also be embodied and practiced in corresponding system and controller implementations.

In other words, any feature, step, or embodiment discussed with respect to the method may likewise be implemented, mutatis mutandis, in the system or controller, and vice versa. For example, where a feature is described in relation to obtaining or processing parameters in the method, the same or a similar feature may be carried out by a controller within the system, and such functionality may be embodied as hardware, software, firmware, or a combination thereof.

Similarly, any embodiment of the system or controller claims may be realized through corresponding steps in the method. Nothing in this disclosure should be interpreted as limiting any single claim category (method, system, or controller) to the exclusion of compatible features from other embodiments.

The embodiments and examples described above are not mutually exclusive and may be combined in any suitable combination to address specific requirements or preferences, unless explicitly stated otherwise.

### BRIEF DESCRIPTION OF THE DRAWINGS

Embodiments of the invention are now described, by way of example only, with reference to the accompanying drawings, of which:
FIG. 1 illustrates a system of power curtailment according to the prior art known.
FIG. 2 illustrates an example of the system according to the present disclosure.
FIG. 3 illustrates a graph representing an example of a dynamic temperature threshold which decreases as the electrical load parameter increases, according to an example of the present disclosure.

### DETAILED DESCRIPTION

The illustration in the drawings is in schematic form. It is noted that in different figures, similar or identical elements may be provided with the same reference signs.

In the diagrams, like numbers refer to like objects throughout. Objects in the diagrams are not necessarily drawn to scale.

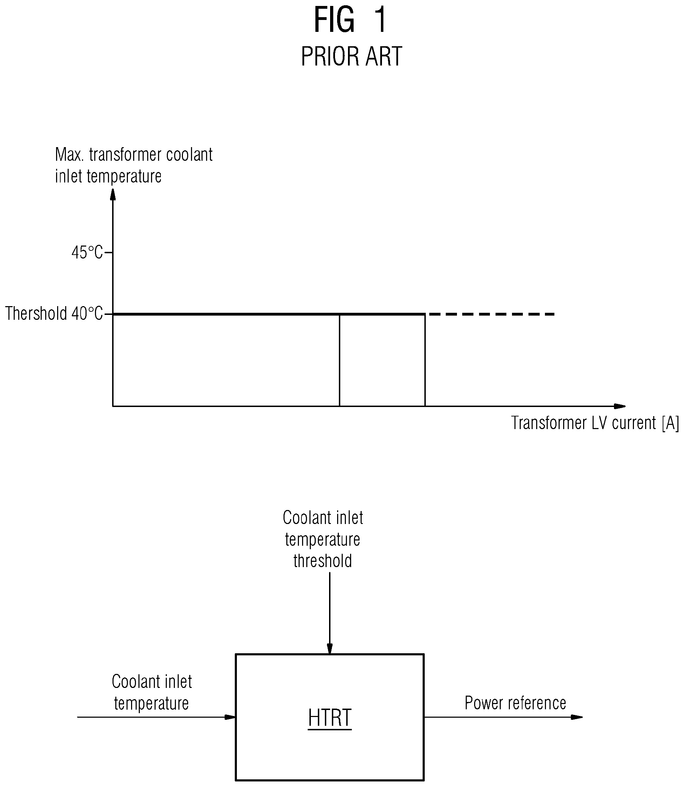

FIG.1 depicts a system based on the known prior art. In at least some known systems of the prior art, as shown in FIG. 1, a single coolant inlet temperature threshold (e.g., 40°C) is used for all operating conditions. The block diagram labeled HTRT receives only the measured coolant inlet temperature and reduces the maximum allowed power production whenever that temperature surpasses the fixed threshold.

This strategy does not account for the actual load or current through the electrical component (as depicted on the horizontal axis of the top figure).

Since the single temperature threshold does not adapt to varying load levels (as illustrated by the horizontal red line in the figure), these solutions become overly conservative or too costly.

This leads to using larger, oversized or over-specified components such as oversized converters and/or transformers, reduced lifespan by accelerated wear when running above a single threshold, or less availability (power production) under high ambient temperatures, because the electrical component will frequently drop below full power output to remain under the fixed threshold.

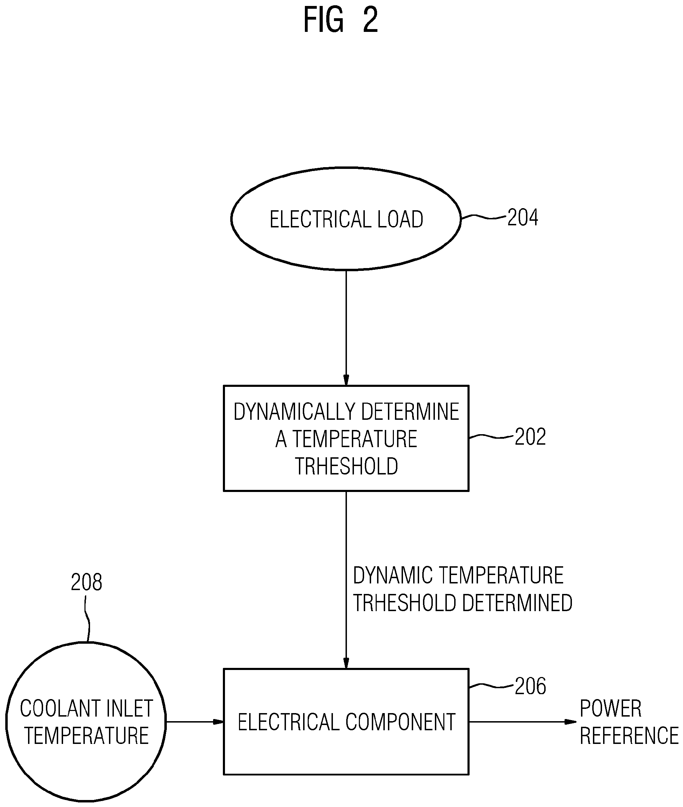

Referring to FIG. 2, there is illustrated a schematic block diagram of a system and method for dynamically controlling power derating in an electrical component. In particular, FIG. 2 shows how a dynamic temperature threshold is determined based on an electrical load and is subsequently used, together with a measured coolant inlet temperature, to control the power output of the electrical component.

Block (202) represents a module which is configured to calculate or retrieve a dynamic temperature threshold based, at least in part, on the electrical load (204). The load input may be represented by electrical current, real or apparent power, torque, or any parameter indicative of how heavily the electrical component is being used. The module (202) can implement a variety of algorithms -such as a lookup table (LUT), a linear interpolation scheme between multiple set points, or a function-based approach-to determine an allowable maximum inlet-coolant temperature threshold at the current loading.

The electrical Load (204) is measured or estimated by appropriate sensors and/or control systems. For instance, in a wind-turbine, the load might correspond to the electrical current flowing through a transformer or converter, or the torque on the turbine's shaft. The load value is provided to module (202), enabling the threshold-determination process to adapt in real time to changing operational demands.

Block (206) represents the controller to manage an equipment whose power output is being managed. This equipment could be, for example, a transformer, converter, generator, or any other electrical apparatus that generates or processes electrical power. Once the module (202) has computed the current allowable inlet-coolant temperature threshold, the controller (206) compares (directly or via a control system) its actual coolant inlet temperature (208) against this dynamic temperature threshold determined.

The controller (206) outputs a power reference or derating command signal, which can actively reduce (or hold) the component's active or reactive power output to maintain safe thermal operating conditions depending at least in part on a comparison between the determined dynamic temperature threshold in block 202 and the inlet coolant temperature 208.

A temperature sensor or equivalent measuring device provides the coolant inlet temperature. This is typically the temperature of the fluid entering a heat exchanger or cooling channel for the electrical component. By comparing this measured temperature (208) to the dynamically determined threshold from module (202), the control logic can decide whether and how much to derate the power.

The system continuously or periodically measures the electrical load parameter (204). The load parameter (204) may vary significantly depending on operational states-e.g., partial load, full load, or transient load conditions.

Based on the current electrical load, the system calculates an allowable coolant inlet temperature limit. At low load, this threshold may be relatively high (since less heat is generated internally). Conversely, at high load, the threshold is lower, ensuring that even minor increases in coolant temperature are accounted for to prevent excessive heating of the component windings or semiconductor devices.

In parallel, the system acquires the current inlet coolant temperature 208 from a dedicated sensor. The measured temperature is passed to, or accessed by, the control logic associated with the controller 206.

A comparison is made between the measured inlet temperature and the threshold output by the controller 206. If the inlet temperature is at or below the threshold, the component can continue to operate at (or near) its current power level. If the inlet temperature exceeds the threshold, the system triggers a derating command to reduce active and/or reactive power, preventing the internal component temperature from reaching unsafe levels.

By determining a temperature threshold that changes based on electrical load, the system more accurately reflects the real thermal stress on the component. This avoids being overly conservative at partial load and prevents under-protection at high load.

The derating logic allows the component to deliver higher power when it is safe to do so (i.e., low load, low coolant inlet temperature) while ensuring timely protection when inlet temperatures or loads approach critical levels.

The structure of FIG. 2 can be implemented as independent software or firmware modules on a controller, with well-defined inputs (load, coolant temperature) and outputs (dynamic threshold, power derating commands). This modularity facilitates retrofitting or upgrading existing systems without requiring a complete redesign.

Overall, FIG. 2 illustrates how obtaining the *electrical load* (204) and the *coolant inlet temperature* (208) enables a dynamic determination of a temperature threshold (202). The *electrical component* (206) then uses that threshold to adjust the *power reference* to ensure safe and efficient operation under varying thermal and load conditions. This two-dimensional control scheme overcomes the limitations of conventional single-threshold approaches by tailoring the allowable cooling parameters to the actual operating load.

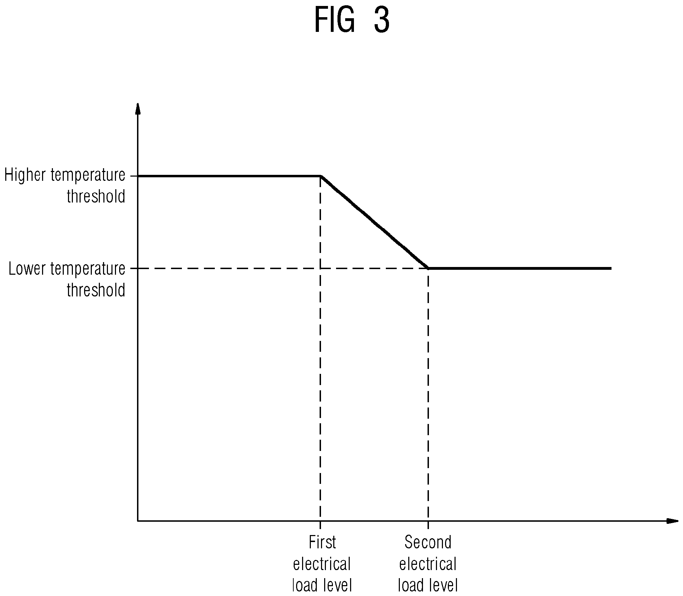

Referring now to FIG. 3, there is shown a representative graph illustrating how the allowable coolant inlet temperature threshold may vary with the electrical load according to an example of the present disclosure. The horizontal axis represents the electrical load level, while the vertical axis indicates the temperature. The horizontal lines depict different thresholds that trigger the power derating, with the thick continuous line depicting an example of a dynamic derating trajectory.

In some embodiments, the dynamic temperature threshold may be defined piecewise, with at least a higher temperature threshold at lower loads and a lower temperature threshold at higher loads. As depicted, there may be a first electrical load level (higher electrical load level) and a second electrical load level (lower electrical load level), each of which can serve as a boundary between different threshold regimes.

Higher temperature threshold (Low Load Regime): Below the first electrical load level, the invention may allow a higher coolant inlet temperature before triggering power reduction, taking advantage of the reduced thermal stress at low current or power flow.

Lower temperature threshold (High Load Regime): Above the second electrical load level, the threshold may drop to a lower permissible temperature, reflecting the greater heat generation and higher risk of thermal overload at full or near-full capacity.

As shown in FIG. 3, the threshold line may slope (or step) downward between the first and second load levels. In some embodiments, the invention may linearly interpolate between a higher threshold and a lower threshold within this intermediate range, ensuring a smooth transition. Alternatively, discrete steps may be employed for simplicity.

In certain implementations, the threshold curve can be defined by a polynomial or other functional relationship so that no abrupt changes occur.

Other embodiments might specify two or more discreet load levels and "snap" to a particular threshold at each level for easier hardware or software control. A piecewise or stepwise function may be implemented.

Although FIG. 3 illustrates two distinct boundary points (the first and second electrical load levels), the invention may accommodate additional or fewer points as desired. For instance, some embodiments might define multiple load thresholds at finer increments to tailor the temperature-limit profile more precisely.

The load measurement itself may be obtained through a current sensor, power monitor, torque sensor, or any other suitable parameter indicative of the electrical component's usage.

In operation, the control system may continuously evaluate the component's real-time load. The resulting dynamic temperature threshold (as illustrated by the curve or piecewise line in FIG. 3) is then compared against the measured inlet coolant temperature.

Whenever the measured coolant inlet temperature exceeds the current threshold on the graph, the controller may reduce the active power, reactive power, or both.

In some embodiments, a time delay or hysteresis logic may be applied to prevent rapid toggling if the coolant temperature fluctuates near a boundary.

The invention may integrate data from an internal winding temperature sensor or ambient temperature sensor to fine-tune the threshold. Such data could shift or reshape the threshold profile shown in FIG. 3, especially if internal hotspots diverge significantly from coolant inlet conditions.

In some embodiments, the slope or the positions of the first and second load levels may be recalibrated based on historical performance or predictive analytics, allowing a "learning" system that adapts thresholds over time.

Although FIG. 3 is described primarily in the context of a transformer load, the same principle may be applied to other electrical components (e.g., converters or generators) subject to thermal constraints.

By referencing FIG. 3, one can see how the invention provides a two-dimensional (temperature vs. load) approach to derating, ensuring that lower loads can tolerate higher coolant inlet temperatures, while high loads bring more conservative (lower) thresholds. This flexibility may help reduce unnecessary curtailment, optimize component lifetime, and offer improved thermal management compared to conventional single-threshold systems.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. A method of dynamically controlling power derating in a wind turbine electrical component, the method comprising:
obtaining a parameter indicative of a coolant inlet temperature associated with the electrical component,
obtaining an electrical load parameter associated with the electrical component,
determining a dynamic temperature threshold as a function of the electrical load parameter, wherein the dynamic temperature threshold decreases as the electrical load parameter increases,
determining whether the parameter indicative of the inlet coolant temperature exceeds or meets the dynamic temperature threshold,
adjusting at least one of active power, reactive power, or the current of the electrical component based, at least in part, on the determined dynamic temperature threshold.

2. The method of claim 1, wherein determining the dynamic temperature threshold comprises selecting a temperature threshold from among a plurality of predetermined threshold values, each threshold value corresponding to a different electrical load range.

3. The method of claim 2, wherein the dynamic temperature threshold is determined by interpolation between at least two predetermined threshold values associated with different electrical load levels.

4. The method of claim 1, wherein the dynamic temperature threshold is defined by a mapping function that:
- provides a higher temperature threshold (T1) when the electrical load parameter is at or below a lower electrical load level (L1),
- provides a second lower temperature threshold (T2) when the electrical load parameter is at or above a higher electrical load level (L2).

5. The method of claim 1 or 4, wherein the mapping function further provides an intermediate temperature threshold for electrical load values between the electrical low load level and the electrical high load level.

6. The method of claim 4 or 5, wherein the mapping function is implemented by any algorithm selected from the group consisting of a two-dimensional look-up table, linear interpolation, a non-linear function, or discrete step changes.

7. The method of claim 6, wherein the electrical load parameter is at least one of:
- current through the electrical component,
- power (active or apparent) processed by the electrical component, or
- torque measured at a shaft coupled to the electrical component.

8. The method of claim 7, further comprising obtaining a second temperature parameter indicative of an internal winding temperature of the electrical component and adjusting the at least one of the active or reactive power output additionally in dependence on whether the winding temperature exceeds a winding-specific limit.

9. The method of claim 8, wherein the step of adjusting the power output is executed by a control unit configured to generate a derating command only when the coolant inlet temperature exceeds the dynamic temperature threshold for a predefined duration.

10. The method of any one of claims 1 to 9, wherein the adjusting comprises reducing active power and/or reactive power output of the electrical component when the measured coolant inlet temperature exceeds the determined dynamic temperature threshold.

11. The method of any one of claims 1 to 10, where the electrical component is a transformer or a converter.

12. A system for dynamically controlling power derating in a wind turbine electrical component, the system comprising:
a first sensor configured to obtain a parameter indicative of a coolant inlet temperature associated with the electrical component,
a second sensor or measuring device configured to obtain an electrical load parameter associated with the electrical component,
a controller configured to:
- determine a dynamic temperature threshold as a function of the electrical load parameter, wherein the dynamic temperature threshold decreases as the electrical load parameter increases,
- determine whether the parameter indicative of the coolant inlet temperature meets or exceeds the dynamic temperature threshold, and
- adjust at least one of an active power, a reactive power output or the current of the electrical component based, at least in part, on the dynamic temperature threshold.

13. Method for upgrading an existing wind turbine, comprising providing and implementing the system of claim 12.

14. A controller for dynamically controlling power derating in a wind turbine electrical component, the controller being configured to:
obtain a parameter indicative of a coolant inlet temperature associated with the electrical component,
obtain an electrical load parameter associated with the electrical component,
determine a dynamic temperature threshold as a function of the electrical load parameter, wherein the dynamic temperature threshold decreases as the electrical load parameter increases,
determine whether the parameter indicative of the coolant inlet temperature meets or exceeds the dynamic temperature threshold, and
adjust at least one of active power, reactive power or the current of the electrical component based, at least in part, on the dynamic temperature threshold.

15. A wind turbine, comprising: at least two rotor blades, said blades attached to a hub, forming a wind rotor mounted to a nacelle which is in turn mounted on a tower, further comprising an electrical generator mechanically connected to the wind rotor, optionally via a gearbox, for converting wind energy into
electrical, wherein said wind turbine comprises the system of claim 12.
